# EUROPEAN PATENT APPLICATION

(11) **EP 4 744 877 A1**
(43) Date of publication of application: **20.05.2026**
(21) Application number: 25215510.6
(22) Date of filing: 13.11.2025
(51) Int. Cl.: B30B 9/26, B01D 25/12, B01D 33/00, C02F 11/122

(54) **SEPARATION APPARATUS**

(30) Priority: 15.11.2024 JP 2024199726
(71) Applicant: Kendensha Co., Ltd., Izumo-shi, Shimane 693-0043 (JP)
(72) Inventor: ISHITOBI, Ryuichi, Izumo-shi, Shimane, 693-0043 (JP)
(74) Representative: Vossius & Partner Patentanwälte Rechtsanwälte mbB

(57) **Abstract**

[Problem] To provide a separation apparatus for separating a substance to be separated, which is a liquid substance containing more liquid, from an object that is a solid-liquid mixture and has fluidity, wherein separation efficiency is improved by adjustment of an object conveyance load, while an increase in manufacturing costs is suppressed.

[Solution] A separation apparatus comprises a conveyance unit (3) in which a plurality of rotating plates (16) having a thickness in a lateral direction are planarly arranged in parallel in both lateral and longitudinal directions in planar view; a frame body(2) in which the conveyance unit is arranged therein and an overall length direction of the frame body extends along the longitudinal direction; and a driving unit (4) for rotationally driving the rotating plates to convey the object introduced onto an upper surface side of the conveyance unit forward, wherein spaces through which the substance to be separated is allowed to leak down are formed at least between either the longitudinally-arranged rotating plates or the laterally-arranged rotating plates, and the conveyance unit can be supported in a tilted state with respect to the frame body so that the rotating plates come to be aligned in a tilted direction in side view.

## Description

### [Technical Field]

This invention relates to a separation apparatus for separating a substance to be separated, which is a liquid substance containing more liquid, from an object that is a solid-liquid mixture and has fluidity.

### [Background Arts]

Conventionally, there has been known a separation apparatus having a conveyance unit in which a plurality of rotating plates having a thickness in a lateral direction are planarly arranged in parallel in both lateral and longitudinal directions in planar view; a frame body in which the conveyance unit is arranged therein and an overall length direction of the frame body is oriented in the longitudinal direction or a direction parallel to the longitudinal direction; and a driving unit for rotationally driving the rotating plates to convey an object introduced onto an upper surface side of the conveyance unit forward.

With the separation apparatus of this type, the object introduced onto the upper surface side of the rotating plates planarly arranged in parallel in both the lateral and longitudinal directions is conveyed forward through rotation of the rotating plates. During such conveyance process, the substance to be separated from the object is allowed to leak down through spaces formed between the longitudinally-arranged rotating plates or the laterally-arranged rotating plates, thereby allowing separation of the substance to be separated from the object to be performed efficiently.

In this connection, there has been also known a separation apparatus with separation efficiency further improved by adjustment of an object conveyance load by means of tilting the whole frame body with the conveyance unit supported thereto (see a patent document 1 described below, for instance).

The separation apparatus disclosed in the patent document 1 has advantages as described above, whereas a structure for tilting the whole frame body causes an increase in manufacturing costs.

### [Technical Literature in Related Arts]

### [Patent Document]

[Patent Document 1] Japanese Unexamined Patent Application Publication No. 2016-013556

### [Summary of the Invention]

### [Problems to be Solved by the Invention]

An object of the present invention is to provide a separation apparatus for separating a substance to be separated, which is a liquid substance containing more liquid, from an object that is a solid-liquid mixture and has fluidity, wherein separation efficiency is improved by adjustment of an object conveyance load, while an increase in manufacturing costs is suppressed.

### [Means for Solving the Problems]

To solve the problem, there is provided a separation apparatus for separating a substance to be separated, which is a liquid substance containing more liquid, from an object that is a solid-liquid mixture and has fluidity, the separation apparatus comprising: a conveyance unit in which a plurality of rotating plates having a thickness in a lateral direction are planarly arranged in parallel in both lateral and longitudinal directions in planar view; a frame body in which the conveyance unit is arranged therein and an overall length direction of the frame body is oriented in the longitudinal direction or a direction parallel to the longitudinal direction; and a driving unit for rotationally driving the rotating plates to convey the object introduced onto an upper surface side of the conveyance unit forward, wherein spaces through which the substance to be separated is allowed to leak down are formed at least between either the longitudinally-arranged rotating plates or the laterally-arranged rotating plates, and the conveyance unit is supported adjustably to a tilted state with respect to the frame body or fixedly in the tilted state with respect to the frame body so that the rotating plates come to be aligned in a tilted direction in side view.

The conveyance unit may have a plurality of rotating shafts rotatably supported and longitudinally arranged in parallel in planar view, and each rotating shaft may be fixedly mounted with the laterally-arranged rotating plates.

The conveyance unit may have a unit frame, and the rotating plates may be rotatably supported on a unit frame side, while the unit frame may be supported on a frame body side adjustably in a tilt angle.

The rotating plates may be rotatably laid and supported between a pair of left and right side walls that configure the frame body.

The driving unit may have an actuator and a transmission mechanism for transmitting power of the actuator to the rotating plates, and the transmission mechanism may be configured to transmit the power of the actuator from both end sides of the rotating shafts.

At least either the rotating shafts or the unit frame may be made of a duplex stainless-steel material.

The frame body may be made of a duplex stainless-steel material.

The conveyance unit may have a plurality of guide members formed in the shape of a longitudinally-extending rod in planar view and supported in the tilted state with respect to the frame body so as to extend along a direction of arrangement of the rotating plates in side view, and the guide members may be laterally arranged in parallel, wherein slit-like spaces are formed between the mutually laterally-adjacent guide members, and the rotating plates are arranged in each space longitudinally in parallel on one straight line in planar view.

### [Effects of the Invention]

According to present invention, separation efficiency is improved by adjustment of an object conveyance load by means of tilting the conveyance unit, while an increase in manufacturing costs is suppressed to a minimum by a structure for tilting the conveyance unit with respect to the frame body, instead of tilting the whole frame body.

### [Brief Description of the Drawings]

[FIG. 1] FIG. 1 is a plan view showing a separation apparatus of the present invention.
[FIG. 2] FIG. 2 is a side view showing a chief configuration of the separation apparatus shown in FIG. 1.
[FIG. 3] FIG. 3 is a side view showing a chief configuration of a conveyance unit.
[FIG. 4] FIG. 4 is a front view showing the chief configuration of the conveyance unit.
[FIG. 5] FIG. 5 is a rear view showing a chief configuration of a driving unit.
[FIG. 6] FIG. 6 is a front view showing arrangement of guide bars, rotating shafts and rotating plates.
[FIG. 7] FIG. 7 is a plan view showing the arrangement of the guide bars, rotating shafts and rotating plates.
[FIG. 8] FIG. 8 is a side view showing a chief configuration of a separation apparatus according to another embodiment of the present invention.
[FIG. 9] FIG. 9 is a front view showing a chief configuration of a conveyance unit and that of a driving unit respectively shown in FIG. 8.

### [Mode for Embodying the Invention]

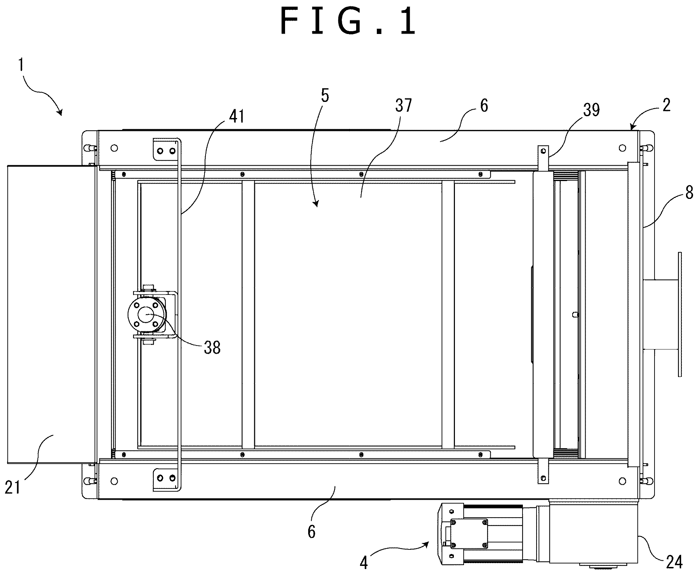

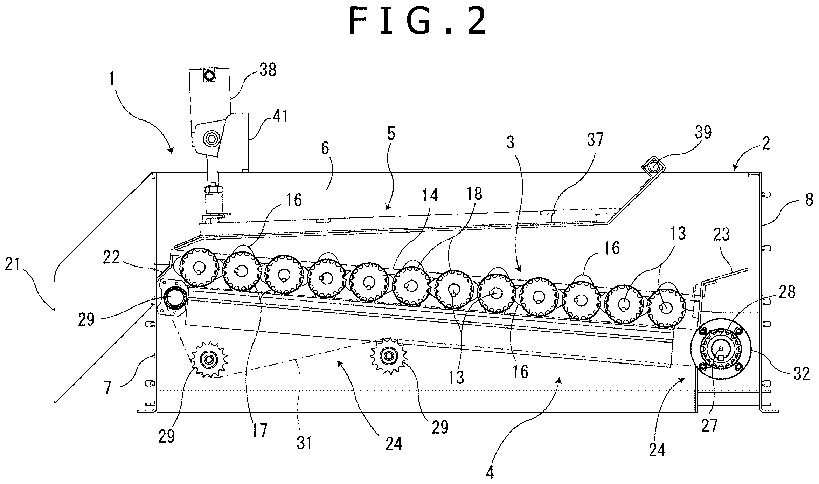

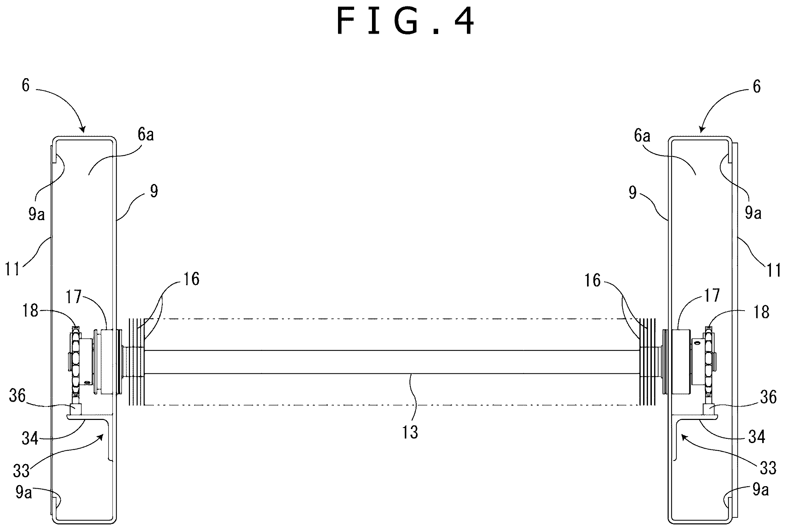

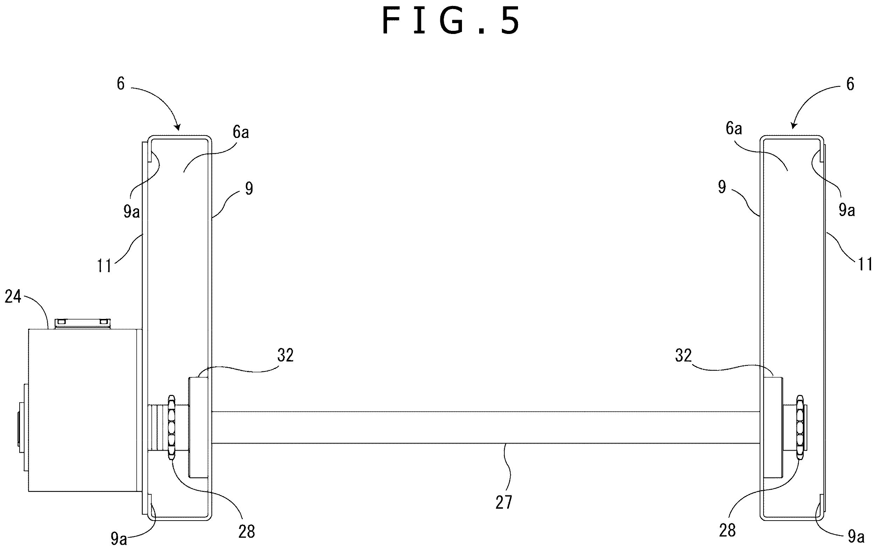

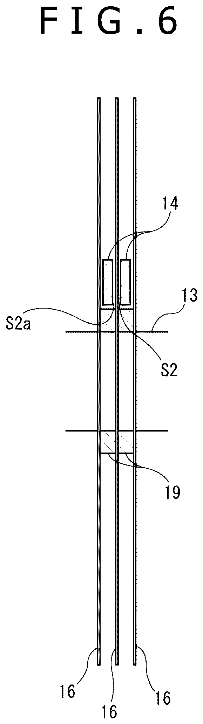

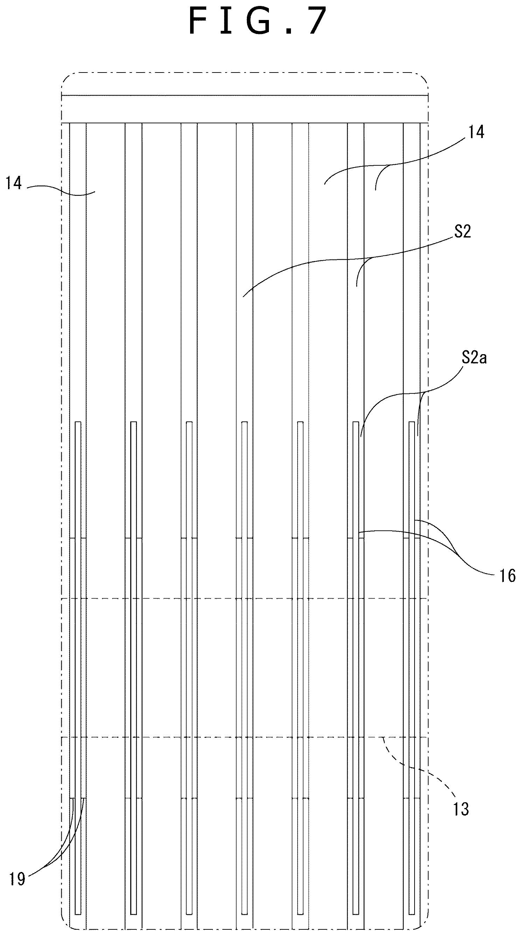

FIG. 1 is a plan view showing a separation apparatus of the present invention, FIG. 2 is a side view showing a chief configuration of the separation apparatus shown in FIG. 1, FIGS. 3 and 4 are a side view and a front view respectively showing a chief configuration of a conveyance unit, FIG. 5 is a rear view showing a chief configuration of a driving unit, and FIGS. 6 and 7 are a front view and a plan view respectively showing arrangement of guide bars, rotating shafts and rotating plates.

The illustrated separation apparatus performs separation of a substance to be separated, which is a liquid substance containing more liquid (mainly, water), from an object that is a solid-liquid mixture and has fluidity, during the process of conveying the object in one direction. Incidentally, the following description will be given on the premise that longitudinal and lateral directions are defined, basically provided that an object conveyance direction in planar view is specified to be forward.

This separation apparatus is to perform deliquoring (mainly, dehydration) of the object that is the mixture of solids with liquids (mainly, water) while conveying the object forward, and has an apparatus body 1 on an upper side and a lower frame (not shown) on a lower side for supporting the apparatus body 1 from below.

The lower frame has a box-shaped waste liquid tank (not shown) with an open top. The waste liquid tank receives and temporarily stores the substance to be separated that is dropped thereinto after being subjected to separation from the object on the apparatus body 1-side.

The apparatus body 1 has a cylindrical (box-shaped) frame body 2 configuring an external shape of the apparatus body 1 and configured to be long in a longitudinally horizontal direction or a direction parallel to the longitudinally horizontal direction (in the present embodiment, the longitudinally horizonal direction), while having both open upper and lower sides, a conveyance unit 3 arranged inside the frame body 2, a driving unit 4 for driving the conveyance unit 3, and a compressing unit 5 arranged right above the conveyance unit 3 to compress the object.

First, a configuration of the frame body 2 will be described.

The frame body 2 has vertically or substantially vertically standing-up side walls 6, 6 configured to be long in the longitudinal direction, a front wall 7 formed between front ends of the left and right side walls 6, 6, and a rear wall 8 formed between rear ends of the left and right side walls 6, 6.

Each side wall 6 has a channel-shaped inner wall panel 9 having an open outer side portion in cross-sectional view, and an outer wall panel 11 having a thickness in the lateral direction and closing the open outer side portion of the inner wall panel 9. The inner wall panel 9 is configured such that its laterally outer ends on upper and lower sides are subjected to bending in a mutually approaching direction to form a pair of flanges 9a, 9a. The outer wall panel 11 is fixedly mounted on the inner wall panel 9 in such a state as being spanned from one of the pair of flanges 9a, 9a to the other. An installation space 6a for installation of various members is formed inside each side wall 6 thus configured.

Each of the front and rear walls 7, 8 is a wall panel having a thickness in the longitudinal direction.

Next will be described a configuration of the conveyance unit 3.

The conveyance unit 3 has a plurality of laterally-extending rotating shafts 13 rotatably laid and supported between the left and right side walls 6, 6 and longitudinally arranged in parallel in planar view, a plurality of guide bars (guide members) 14 formed in the shape of a longitudinally-extending rod and laterally arranged in parallel in planar view, and a plurality of rotating plates 16 having a thickness in the lateral direction.

In planar view, the rotating shafts 13 are longitudinally arranged in parallel with predetermined spacing, with the mutually longitudinally-adjacent rotating shafts arranged in parallel with each other. Each rotating shaft 13 is rotatably laid and supported between mutually opposed portions of the left and right inner wall panels 9, 9 through bearing parts (in the present embodiment, bearings) 17, 17. Each bearing 17 is fixedly fitted into a support hole (not shown) bored in the inner wall panel 9.

Each rotating shaft 13 is rotatably supported in such a state as being inserted through the pair of bearings 17, 17. Each rotating shaft 13 is configured such that its both ends protruding from the left and right inner wall panels 9, 9 to the lateral outsides (the installation spaces 6a) through the bearings 17, 17 are integrally rotatably mounted with conveying sprockets 18, 18. Each conveying sprocket 18 configures part of the driving unit 4. Details thereof will be described below.

In between the left and right side walls 6, 6, the rotating plates 16 are planarly arranged in parallel in both the longitudinal and lateral directions in planar view. Specifically, the rotating plates 16 are fixedly and integrally rotatably mounted on the rotating shafts 13 vertically or substantially vertically inserted through rotating plate centers. Each rotating shaft 13 is fixedly mounted with the rotating plates 16, with these rotating plates arranged with predetermined spacing in the lateral direction specified as the axial direction. A distance between the mutually laterally-adjacent rotating plates 16, 16 is held by circular ring-shaped spacers 19 externally fitted onto the rotating shafts 13.

The rotating shafts 13 with the rotating plates 16 mounted thereon are provided in such a state as being longitudinally arranged in parallel in planar view, thereby resulting in the rotating plates 16 being planarly arranged in both the longitudinal and lateral directions in planar view. Further, the rotating plates 16 on one of the mutually longitudinally-adjacent rotating shafts 13, 13 and those on the other rotating shaft 13 in planar view are situated such that the rotating plates corresponding in position in the lateral direction specified as the axial direction are matched, thereby resulting in the rotating plates 16 being arranged in a matrix form within the space between the side walls 6, 6.

In other words, the rotating plates 16 are longitudinally arranged in one straight line in planar view, thereby configuring a line of conveyance L. With a plurality of lines of conveyance L laterally arranged in parallel with predetermined spacing, an upper surface of the conveyance unit 3 configures a conveyance face having a lateral width and extending in the longitudinal direction in planar view.

The conveyance face (conveyance unit 3) is mounted and supported on the frame body 2-side (specifically, the right and left inner wall panels 9, 9) in a tilted posture (specifically, tilted slantingly upward toward the front) in side view with respect to the frame body 2 (apparatus body 1) supported by the lower frame from below in a horizontal posture.

Namely, the laterally-arranged rotating shafts 13 are rotatably supported on the frame body 2-side in such a state as being arranged in an upwardly or downwardly (in the present embodiment, upwardly) and forwardly tilted direction (longitudinally tilted direction) specified as an object conveyance direction in side view. Incidentally, in the configuration of the present embodiment, a conveyance face tilt angle with respect to the frame body 2 is fixed.

Each rotating plate 16 is formed in a circular shape having a center through which the rotating shaft 13 is vertically or substantially vertically inserted or an elliptic shape having an intersection (center) of minor and major axes, through which the rotating shaft 13 is vertically or substantially vertically inserted. Referring to the present embodiment, all the rotating plates 16 are formed in the same elliptic shape.

Incidentally, the rotating plates 16 mounted on the same rotating shaft 13 need to be formed in the same shape, whereas the rotating plates 16 configuring the same line of conveyance L do not need to be formed in the same shape.

For instance, the respective pairs of mutually longitudinally-adjacent rotating plates 16, 16 in the same line of conveyance L may be configured such that the front-side rotating plate 16 is set to be smaller than or equal to the rear-side rotating plate 16 in radius of a rotation locus. On this occasion, the foremost rotating plate in each line of conveyance L may be formed in a circular shape with the smallest radius of the rotation locus.

Further, the respective pairs of mutually longitudinally-adjacent rotating plates 16, 16 in the same line of conveyance L are overlapped in rotation locus in side view while being mutually shifted in phase by 1/4 period. Accordingly, the respective pairs of mutually longitudinally-adjacent rotating plates 16, 16 in the same line of conveyance L allow certain spaces S1 to be formed at all times therebetween during rotation of these rotating plates. The substance to be separated from the object introduced onto a conveyance face side of the conveyance unit 3 is allowed to drop through the spaces S1 into the waste liquid tank right below the conveyance unit.

Each guide bar 14 has a rectangular cross-section and is fixedly mounted on the frame body 2-side in a posture directed in the longitudinal direction in planar view while being directed in the longitudinally tilted direction in side view. In other words, each guide bar is formed in the shape of a rod extending in the direction of arrangement of the rotating plates 16 or a direction parallel to such direction of arrangement in side view.

The guide bars 14 are laterally arranged in parallel with predetermined spacing. There are formed slit-like spaces S2 between the mutually laterally-adjacent guide bars 14, 14. The rotating plates 16 configuring one corresponding line of conveyance L are arranged in each slit-like space S2 in planar view. Incidentally, spaces S2a configuring part of the spaces S2 are also formed between the mutually laterally-adjacent guide bars 14, 14 and each rotating plate 16 arranged in the slit-like spaces S2 formed between these guide bars 14, 14. The substance to be separated is also allowed to leak out and drop through the spaces S2a situated between the laterally-arranged rotating plates 16, 16.

Further, each guide bar 14 is situated almost right above the rotating shafts 13 arranged in the longitudinally tilted direction in side view. Furthermore, in the space between the left and right side walls 6, 6, the laterally-arranged guide bars 14 are configured such that their upper surfaces are formed so flat as to be flush with each other.

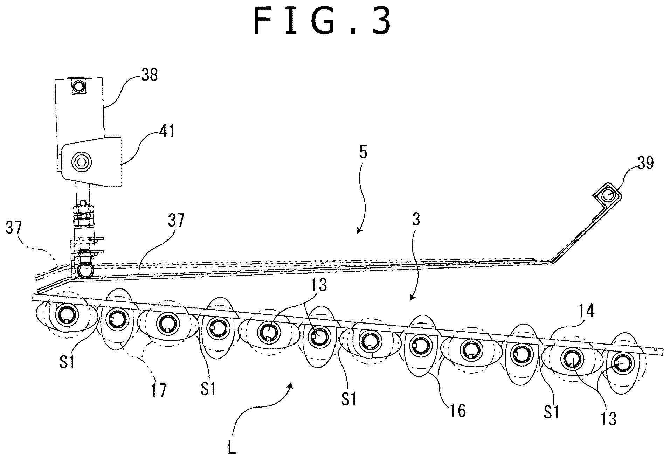

When each rotating plate 16 is rotationally driven in a normal rotation direction (counterclockwise in FIGS. 2 and 3), with the object introduced from the rear end of the conveyance face, the conveyance face starts moving in a wavy state, so that when each rotating plate 16 protrudes upward from the flat upper surfaces of the guide bars 14, an outer edge of each rotating plate 16 is displaced forward to allow the object to be sequentially conveyed forward.

During this conveyance process, the liquid substance to be separated from the object is allowed to leak out and drop (leak down) through the above-mentioned two types of numerous spaces S1, S2a in the space between the left and right side walls 6, 6, followed by being stored in the waste liquid tank. Such leak-down action allows the object to be conveyed forward, while causing a solid ratio in the object to be gradually increased.

The object having reached the front end is discharged, in a state close to the solid resulting from sufficient dehydration of the liquid, from the rear end of the frame body 2 to the outside thereof, followed by being guided slantingly downwardly forward in such a way as to slide down on a discharge guide member 21 integrally provided at the rear end of the frame body. In this way, separation of the substance to be separated from the object is performed.

Thus, the frame body 2 also serves as a frame (unit frame) of the conveyance unit 3. Further, the conveyance unit 3 is also mounted on and supported by the front and rear walls 7, 8 of the frame body 2 through front and rear support frames 22, 23 respectively.

Next will be described a configuration of the driving unit 4.

The driving unit 4 has a drive motor (actuator) 24 installed on a rear end side of the outer side surface of either one of the left and right side walls 6 (the right side wall) and a transmission mechanism 26 for transmitting power of the drive motor 24 to the conveyance unit 3 (specifically, the rotationg plates 16).

The drive motor 24 is mounted on and supported by the outer wall panel 11 of the side wall 6 in such a state as being situated on the outer side of that side wall 6. The drive motor 24 is configured to output the power thereof toward the installation space 6a inside the side wall 6 by which the drive motor is supported.

The transmission mechanism 26 has, in addition to the above-mentioned rotating shaft 13 and conveying sprocket 18, a laterally-extending driving shaft 27 rotatably laid and supported between the left and right side walls 6, 6, an active sprocket 28 integrally rotatably mounted on the driving shaft 27, a following sprocket 29 freely rotatingly supported on the side wall 6, and a transmission chain 31 wound around these three types of sprockets 18, 28, 29.

The driving shaft 27 is rotatably supported by the left and right inner wall panels 9, 9 in such a state that respective end-side portions of the driving shaft are inserted through a pair of bearings 32, 32 fixedly fitted into respective support holes (not shown) bored in mutually opposed portions of the left and right inner wall panels 9, 9.

The respective end-side portions of the driving shaft 27 are situated facing the installation spaces 6a, 6a inside the left and right side walls 6, 6 through the bearings 32, 32. The driving shaft 27 has one end directly connected to the drive motor 24 and is fixedly mounted with the active sprocket 28 on an outer circumference of one end-side portion of the driving shaft while being also fixedly mounted with the active sprocket 28 on that of the other end-side portion thereof.

With the above-mentioned configuration, the same number of conveying sprockets 18 as the number of rotating shafts 13 are provided for each of the left and right installation spaces 6a, 6a.

The following sprockets 29 are arranged distributively in the left and right installation spaces 6a, 6a. One or more following sprockets 29 are provided below the conveying sprockets 18, and besides, there is also provided the following sprocket 29 at an opposite side portion of the longitudinally-arranged conveying sprockets 18 with respect to the active sprocket 28.

The transmission chain 31 is individually provided in the left and right installation spaces 6a, 6a. The individual transmission chain 31 is of annular shape in which the transmission chain is wound around the active sprocket 28, the conveying sprockets 18 and the following sprockets 29 that are respectively arranged in the installation space 6a where the transmission chain is located. The transmission chain 31 thus configured transmits the power of the drive motor 24 to the conveying sprockets 18 to rotationally drive each rotating plate 16 through the rotating shafts 13 rotating integrally with the conveying sprockets 18.

Incidentally, each installation space 6a is provided with a support member 33 in such a state as being situated directly on an underside of the conveying sprockets 18 arranged in the longitudinally tilted direction. The support member 33 has a frame part 34 formed in the longitudinally tilted direction and having such an inverted L-shape in cross-sectional view as protruding downward along a bearing 17-side surface of the inner wall panel 9 while protruding from the bearing 17-side surface to the lateral outside, and a support part 36 installed on a flat upper surface of the frame part 34 and formed in the longitudinally tilted direction.

The support part 36 comes to be situated almost directly on the underside of the conveying sprockets 18 arranged in the longitudinally tilted direction. It may be possible for lubricating oil to be supplied from a support part 36-side to both the conveying sprocket 18 and the transmission chain 31. It is noted that the support part 36 can be omitted from the support member 33.

With the transmission mechanism 26 thus configured, when the driving shaft 27 is rotationally driven in the normal rotation direction by the drive motor 24, the power of the drive motor is branched to the left and right installation spaces 6a, 6a of the left and right side walls 6, 6, followed by being transmitted to the left and right end sides of each rotating shaft 13 through the left and right transmission chains 31, thereby allowing the rotating plates 16 fixedly mounted on each rotating shaft 13 to be rotationally driven in the normal rotation direction.

Next will be described a configuration of the compressing unit 5.

The compressing unit 6 has a compressing plate (compressing member) 37 situated almost right above the conveyance face and supported vertically swingably with an upper end-side portion of the apparatus body 1 as a fulcrum, and an air cylinder 38 for elastically pressing the compressing plate 37 downward.

The compressing plate 37 is configured such that its rear part is subjected to bending upward with respect to its middle and front parts, and a rear end of the bent rear part is pivotally supported on the frame body 2-side of the apparatus body 1 through a laterally-extending shaft 39. A lateral width of the compressing plate 37 is set to be substantially equal to or slightly narrower than a distance between the left and right side walls 6, 6, while a longitudinal length of the compressing plate 37 is set to be substantially equal to or slightly shorter than an overall length of the conveyance face.

At the front end of the apparatus body 1, the air cylinder 38 is mounted and supported between a center of a support frame 41 laid between the left and right side walls 6, 6 while being directed in the lateral direction in planar view and a lateral center of a front end-side portion of the compressing plate 37. The air cylinder 38 is extended to swing the compressing plate 37 downward, thereby allowing the object situated on a front-side portion of the conveyance face to be elastically pressed by the compressing plate 37 for the sake of acceleration of deliquoring of that object, whereas the air cylinder 38 is contracted to swing the compressing plate 37 upward, thereby allowing the object to be released from downward pressing.

It is noted that instead of the air cylinder 38, use may be also made of a gas spring, a compressing spring or like energizing member for elastically pressing the compressing plate 37, or alternatively, a weight may be provided on an upper surface side of the compressing plate 37, for instance, to perform downward energizing of the compressing plate 37 using the weight.

With the separation apparatus thus configured, the conveyance unit 3 fixedly supported in such the state as being longitudinally tilted with respect to the apparatus body 1 (frame body 2) supported from below by the lower frame in the longitudinally horizontal posture allows for appropriate setting of object conveyance resistance in accordance with the tilted state of the conveyance unit, thereby resulting in the separation apparatus being simplified in structure, as compared with a separation apparatus with a structure in which the object conveyance resistance is set by vertically swinging the apparatus body 1 with respect to the lower frame.

It is noted that each separation apparatus part is made of metal or like material with a certain strength or more, whereas either one of or both the frame body 2 and the rotating shafts 13 may be particularly made of a duplex stainless-steel material for improvement on the strength of a deliquoring (dehydration) system.

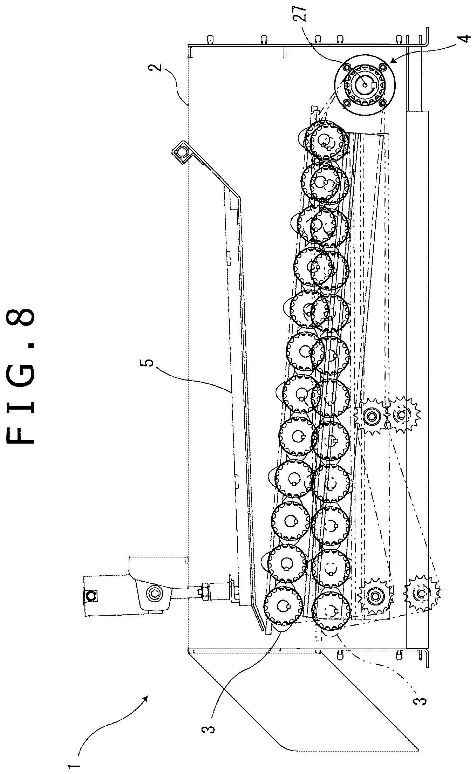

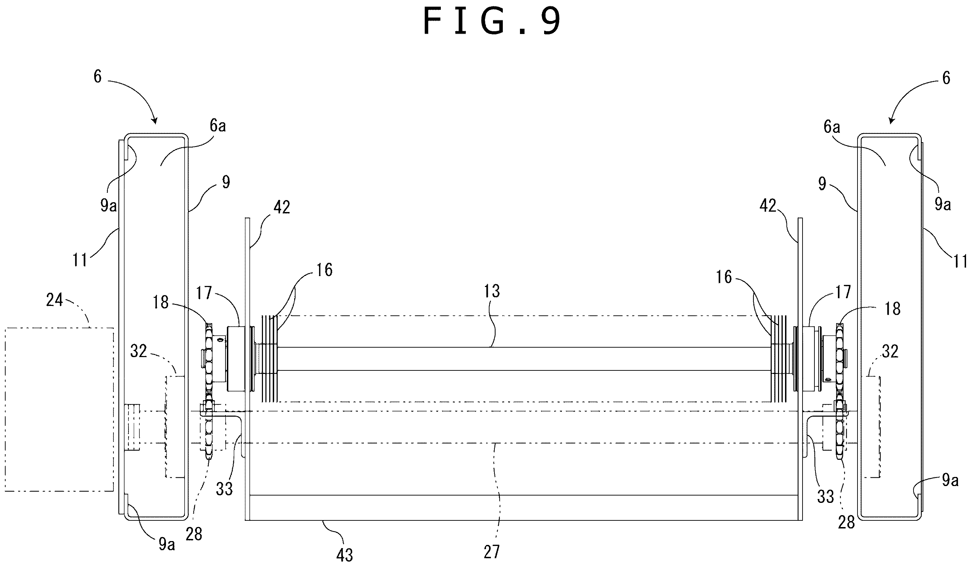

Next will be described another embodiment of the present invention with reference to FIGS. 8 and 9, in terms of a difference in some parts from the above embodiment.

FIG. 8 is a side view showing a chief configuration of a separation apparatus according to another embodiment of the present invention, and FIG. 9 is a front view showing a chief configuration of a conveyance unit and that of a driving unit respectively shown in FIG. 8. The conveyance unit 3 in the above-mentioned embodiment is fixedly mounted on and supported by the frame body 2, whereas the conveyance unit 3 in this embodiment is mounted and supported adjustably in a vertical swinging position.

Firstly, the unit frame of the conveyance unit 3 is provided separately from the side walls 6, 6 (frame body 2). Referring to the illustrated embodiment, there are provided, as the unit frame, a pair of plate-shaped left and right side frames 42, 42 having a thickness in the lateral direction and mutually opposed in parallel, and a laterally-extending connection frame 43 for fixedly connecting the left and right side frames 42, 42 together.

The left and right side frames 42, 42 are arranged between the left and right side walls 6, 6 and are used as an alternative for the above-mentioned inner wall panels 9, 9.

More specifically, the driving shaft 27 is laid and rotatably supported between the left and right side walls 6, 6 with the bearings 32, 32, like the above-mentioned embodiment. Each side frame 42 has a bored through hole (not shown) through which the driving shaft 27 is inserted.

Meanwhile, each rotating shaft 13 is laid and supported in a rotatable state between the left and right side frames 42, 42 with the bearings 17, 17. The three types of sprockets 18, 28, 29 and the transmission chain 31 are individually provided in both the space between the side frame 42 and the side wall 6 on either the left or right side and the space between the side frame 42 and the side wall 6 on the other side.

On a side frame 42-surface on the side facing the nearby side wall 6, the following sprocket 29 is freely rotatingly supported thereto, and the support part 36 is also fixedly mounted thereon. Each rotating shaft 13 is configured such that its portion situated between the left and right side flames 42, 42 is fixedly mounted with the rotating plates 16. Namely, there is formed the conveyance face between the left and right side frames 42, 42. Further, the guide bars 14 are fixedly mounted on the unit frame 42, 43-side.

With the above-mentioned configuration, as shown by imaginary and solid lines in FIG. 8, it becomes possible for the conveyance unit 3 to be mounted on and supported by the frame body 2 vertically swingably with the laterally-extending driving shaft 27 as the fulcrum. Such vertical swinging of the conveyance unit 3 may be performed manually or using an actuator such as a hydraulic cylinder. In this connection, the separation apparatus needs to have a structure capable of locking the conveyance unit 3 at multiple stage positions or any position within a vertical swinging range of the conveyance unit, and therefore, use of one hydraulic cylinder as described above is considered to be applicable.

Such vertical swinging of the conveyance unit also allows the conveyance face to be vertically swung with the driving shaft 28 as the fulcrum, and accordingly, the tilt angle of the conveyance unit can be adjusted. In other words, the conveyance unit 3 is supported adjustably in the tilt angle in the above-mentioned longitudinally tilted direction with respect to the frame body 2.

It is noted that both the side frames 42 and the connection frame 43, which are provided as the unit frame, may be made of a duplex stainless-steel material to ensure the strength of the above-mentioned dehydration (deliquoring) system.

Thus, it can be appreciated that for the sake of supporting the conveyance unit 3 in the tilted state with respect to the frame body 2 so that the rotating plates 16 come to be aligned in the tilted direction in side view, there exists two ways: one is to fixedly support the conveyance unit 3 in the tilted state with respect to the frame body as described in the above-mentioned embodiment, and the other is to support the conveyance unit 3 vertically swingably with respect to the frame body 2 as described in this embodiment.

### [Explanation of Reference Numerals]

- 2: Frame body
- 3: Conveyance unit
- 4: Driving unit
- 6: Side wall
- 13: Rotating shaft
- 14: Guide bar (guide member)
- 16: Rotating plate
- 24: Drive motor (actuator)
- 26: Transmission mechanism
- 42: Side frame (unit frame)
- 43: Connection frame (unit frame)
- S1: Space
- S2: Space
- S2a: Space

## Claims

1. A separation apparatus for separating a substance to be separated, which is a liquid substance containing more liquid, from an object that is a solid-liquid mixture and has fluidity, the separation apparatus comprising:
a conveyance unit in which a plurality of rotating plates having a thickness in a lateral direction are planarly arranged in parallel in both lateral and longitudinal directions in planar view;
a frame body in which said conveyance unit is arranged therein and an overall length direction of the frame body is oriented in the longitudinal direction or a direction parallel to the longitudinal direction; and
a driving unit for rotationally driving the rotating plates to convey the object introduced onto an upper surface side of said conveyance unit forward;
wherein spaces through which the substance to be separated is allowed to leak down are formed at least between either the longitudinally-arranged rotating plates or the laterally-arranged rotating plates, and said conveyance unit is supported adjustably to a tilted state with respect to said frame body or fixedly in the tilted state with respect to said frame body so that the rotating plates come to be aligned in a tilted direction in side view.

2. The separation apparatus according to Claim 1, wherein said conveyance unit has a plurality of rotating shafts rotatably supported and longitudinally arranged in parallel in planar view, and each rotating shaft is fixedly mounted with the laterally-arranged rotating plates.

3. The separation apparatus according to Claim 1 or 2, wherein said conveyance unit has a unit frame, and said rotating plates are rotatably supported on a unit frame side, while said unit frame is supported on a frame body side adjustably in a tilt angle.

4. The separation apparatus according to Claim 1, 2, or 3 wherein said rotating plates are rotatably laid and supported between a pair of left and right side walls that configure said frame body.

5. The separation apparatus according to any one of Claims 2 to 4, wherein said driving unit has an actuator and a transmission mechanism for transmitting power of the actuator to said rotating plates, and said transmission mechanism is configured to transmit the power of said actuator from both end sides of said rotating shafts.

6. The separation apparatus according to any one of Claims 2 to 5, wherein at least either said rotating shafts or said unit frame is made of a duplex stainless-steel material.

7. The separation apparatus according to any one of Claims 1 to 6, wherein said frame body is made of a duplex stainless-steel material.

8. The separation apparatus according to any one of Claims 1 to 7, wherein said conveyance unit has a plurality of guide members formed in the shape of a longitudinally-extending rod in planar view and supported in the tilted state with respect to said frame body so as to extend along a direction of arrangement of said rotating plates in side view, and the guide members are laterally arranged in parallel, wherein slit-like spaces are formed between the mutually laterally-adjacent guide members, and said rotating plates are arranged in each space longitudinally in parallel on one straight line in planar view.
